(19)

Europäisches Patentamt
European Patent Office
Office européen des brevets

(11) **EP 4 372 353 A1**

(12) **EUROPEAN PATENT APPLICATION**
published in accordance with Art. 153(4) EPC

(43) Date of publication:
**22.05.2024 Bulletin 2024/21**

(21) Application number: **21949978.7**

(22) Date of filing: **16.11.2021**

(51) International Patent Classification (IPC):
***G01N 1/02*** *(2006.01)*

(52) Cooperative Patent Classification (CPC):
**G01N 1/02**

(86) International application number:
**PCT/CN2021/130894**

(87) International publication number:
**WO 2023/284206 (19.01.2023 Gazette 2023/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.07.2021 CN 202110809072**

(71) Applicant: **Jiangsu Leuven Instruments Co. Ltd**
**Xuzhou, Jiangsu 221300 (CN)**

(72) Inventors:
• **ZHANG, Huaidong**
**Xuzhou, Jiangsu 221300 (CN)**
• **CUI, Hushan**
**Xuzhou, Jiangsu 221300 (CN)**

• **CHENG, Shiran**
**Xuzhou, Jiangsu 221300 (CN)**
• **ZHU, Xinpan**
**Xuzhou, Jiangsu 221300 (CN)**
• **ZHANG, Hao**
**Xuzhou, Jiangsu 221300 (CN)**
• **MENG, Qingguo**
**Xuzhou, Jiangsu 221300 (CN)**
• **HU, Dongdong**
**Xuzhou, Jiangsu 221300 (CN)**
• **XU, Kaidong**
**Xuzhou, Jiangsu 221300 (CN)**

(74) Representative: **Eisenführ Speiser**
**Patentanwälte Rechtsanwälte PartGmbB**
**Postfach 10 60 78**
**28060 Bremen (DE)**

(54) **OFFLINE SAMPLER AND CONTAMINATION COLLECTION SYSTEM**

(57)    An offline sampler and a contamination collection system. The offline sampler comprises a test tube module (200), a pick-and-place cover component, and a drive component (400). The test tube module (200) comprises at least one test tube (201). The test tube (201) comprises a tube body (211) and a cover body (212). The tube body (211) is configured to receive scanning liquid dissolved with metal contamination, and the cover body (212) is configured to block an opening of the tube body (211). The drive component (400) is configured to drive the pick-and-place cover component to act to take the cover body (212) and drive the cover body (212) to move to the position where the tube body (211) is not interfered to receive the scanning liquid, or place the cover body (212) on the tube body (211). The offline sampler can automatically open the test tube (201), and can automatically close the tube body (211) of the test tube (201) after collecting the scanning liquid dissolved with metal contamination, so as to seal the tube body (211) and prevent external contaminants from falling into the test tube (201).

Fig. 1

## Description

The present application claims priority to Chinese Patent Application No. 202110809072.0, titled "OFFLINE SAMPLER AND CONTAMINATION COLLECTION SYSTEM", filed on July 16, 2021 with the China National Intellectual Property Administration, which is incorporated herein by reference in its entirety.

## FIELD

The present application relates to the field of semiconductor technology, and in particular to an offline sampler and a contamination collection system.

## BACKGROUND

The semiconductor manufacturing industry gradually develops towards an increasingly high operating speed and an increasingly smaller device size, and the element density of a chip is also continuously increasing. In order to meet the requirement of chip performance's improvement, different chemical elements are required to be introduced into each technology generation. However, the introduction of the different chemical elements also brings difficulties for the metal contamination control in chip manufacturing. Thus, in order to ensure the qualification rate of devices such as chips, it is necessary to detect metal contamination in the manufacturing process.

Currently, a conventional metal contamination detection adopts a combination of a Vapor Phase Decomposition (VPD) metal contamination collection system and a mass spectrometer, such as an Inductively Coupled Plasma Mass Spectrometer (ICPMS). The collection system first uses scanning liquid to collect metal contamination on a surface of a wafer to be analyzed to dissolve the metal contamination in the scanning liquid, and then the scanning fluid with dissolved metal contamination is sent to the mass spectrometer for analysis.

When the scanning fluid is transferred from the collection system to the mass spectrometer, a test tube is required. After the test tube collects the scanning fluid with dissolved metal contamination in the collection system, the test tube is taken out from the collection system and sent to the mass spectrometer for analysis, that is, offline analysis. During the process of transferring the scanning fluid by using the test tube, the test tube needs to be temporarily sealed to prevent external contaminants from falling into the test tube and interfering with the detection.

## SUMMARY

The object of the present application is to provide an offline sampler and a contamination collection system. The offline sampler can automatically open a cover of a test tube, and can also automatically close the cover after the scanning fluid containing dissolved metal contamination is collected by a tube body of the test tube, so as to seal the tube body and prevent external contaminants from falling into the test tube.

To solve the above technical problems, an offline sampler for a contamination collection system is provided according to the present application, which includes a test tube module, a pick-and-place cover component, and a driving component. The test tube module includes at least one test tube, each of the at least one test tube includes a tube body and a cover, the tube body is configured to receive a scanning liquid dissolved with metal contamination, and the cover is configured to block an opening of the tube body. The driving component is configured to drive the pick-and-place cover component to pick the cover and drive the cover to move to a position where the cover is not interfered with the tube body receiving the scanning liquid, or place the cover on the tube body.

In the offline sampler as described above, the test tube module includes a carrier disk. The carrier disk has multiple mounting grooves, and the multiple mounting grooves are configured for placing the at least one test tube. The offline sampler further includes a rotating mechanism, the rotating mechanism is configured to drive the carrier disk to rotate, the multiple mounting grooves are arranged around a rotation center of the carrier disk, and a distance between each of the multiple mounting grooves and the rotation center of the carrier disk is consistent.

In the offline sampler as described above, the carrier disk is provided with an identifier for identifying the mounting groove.

In the offline sampler as described above, a handle is provided on the carrier disk.

In the offline sampler as described above, the driving component is configured to drive the pick-and-place cover component to rotate to switch between a first position and a second position, the first position is a position where the pick-and-place cover component is capable of picking or placing the cover, and the second position is a position where the cover is not interfered with the tube body receiving the scanning liquid. The driving component is also configured to drive the pick-and-place cover component to move up and down relative to the carrier disk.

In the offline sampler as described above, the driving component includes a lifting driving part and a rotation driving part, the rotation driving part is mounted on a lifting part of the lifting driving part, and the pick-and-place cover component is connected to a rotation output end of the rotation driving part.

In the offline sampler as described above, the pick-and-place cover component includes a suction cup and a vacuum generator, the vacuum generator is connected to the suction cup through a ventilation pipeline, and the suction cup is configured to suck the cover.

In the offline sampler as described above, the offline sampler further includes a swing arm, the suction cup is mounted on the swing arm, and the driving component is configured to drive the suction cup to act by driving the swing arm.

In the offline sampler as described above, the swing arm has an internal space, and the ventilation pipeline is disposed in the internal space.

In the offline sampler as described above, the offline sampler further includes a volume acquisition module, and the volume acquisition module is configured to determining a volume of the scanning liquid received in the tube body.

In the offline sampler as described above, the volume acquisition module includes a light source, an image capture device, and an image analysis member. The light source is configured to provide light for the photographing of the image capture device, the image capture device is configured to photograph the tube body that receives the scanning liquid and transmit an image that is photographed to the image analysis member, and the image analysis member is configured to determine the volume of the scanning liquid received in the tube body based on the image.

In the offline sampler as described above, the tube body includes a large-diameter section and a small-diameter section connected to the large-diameter section, and the opening of the tube body is formed at the large-diameter section.

In the offline sampler as described above, the offline sampler further includes a sampling box, the sampling box has a chamber, and both the small-diameter section of the tube body and the volume acquisition module are arranged in the chamber.

In the offline sampler as described above, the sampling box also has an air extraction port communicating with the chamber.

A contamination collection system is also provided according to the present application, which includes a collection device and the offline sampler described above. The offline sampler is integrated with the collection device, and a position of a scanning liquid nozzle of the collection device corresponds to a position of the test tube module.

The offline sampler according to the present application, which is used for the contamination collection system, is provided with the test tube module, the pick-and-place cover component, and the driving component. The test tube of the test tube module includes the tube body and the cover for blocking the opening of the tube body. The pick-and-place cover component can act under the driving of the driving component to remove the cover from the tube body or place the cover on the tube body, and after the cover is removed, the cover is moved to the position where it is not interfered with the tube body receiving the scanning liquid dissolved with metal contamination. In practical applications, when the scanning liquid sample is required to be collected, the driving component can drive the pick-and-place cover component to pick and remove the cover. The scanning liquid nozzle of the contamination collection system can spray the scanning liquid sample into the tube body, and then, the driving component can drive the pick-and-place cover component to place the cover back to the tube body, so as to cover the opening of the tube body again. The offline sampler can automatically open and close the test tube, preventing external contaminants from falling into the test tube and contaminating the scanning liquid sample, thereby improving the detection accuracy of the scanning liquid sample.

In a preferred embodiment, the offline sampler is also provided with the volume acquisition module that can determine the volume of the scanning liquid received in the test tube, providing a basic condition for accurate analysis of metal contamination.

**BRIEF DESCRIPTION OF THE DRAWINGS**

Figure 1 is a schematic structural diagram of an offline sampler according to an embodiment of the present application;

Figure 2 is a schematic structural diagram of a test tube module in Figure 1;

Figure 3 is a schematic structural diagram of a carrier disk in Figure 2;

Figure 4 is a schematic structural diagram of a test tube according to a specific embodiment;

Figure 5 is a cross-sectional view of the test tube shown in Figure 4; and

Figure 6 is a schematic structural diagram of a tube body containing a scanning liquid sample.

The reference signs are listed as follows:

sampling box 100, bottom wall 101, top wall 102, side wall 103;
test tube module 200, test tube 201, tube body 211, large-diameter section 2111, small-diameter section 2112, transition portion 2113, cover 212, carrier disk 202, mounting groove 221, identifier 222, handle 223;
suction cup 301, swing arm 302, first arm 321, second arm 322;
driving component 400, rotating mechanism 500; and
volume acquisition module 600, light source 601, image capture device 602.

## DETAILED DESCRIPTION OF EMBODIMENTS

In order to enable those skilled in the art to better understand the solutions of the present application, the present invention is further described in detail below in conjunction with the drawings and specific embodiments.

In order to facilitate understanding and concise description, a contamination collection system and an offline sampler are described together below, and the beneficial effects are repeated.

A contamination collection system according to the present application can be used to collect metal contamination during the manufacturing process of semiconductor elements such as wafers. The contamination collection system includes a collection device and an offline sampler that are integrated. The collection device uses a scanning liquid to collect metal contamination on a surface of a wafer to be analyzed, so that the metal contamination is dissolved in the scanning liquid. The offline sampler is configured to temporarily store the scanning liquid containing the dissolved metal contamination, so that the scanning fluid containing the dissolved metal contamination can be subsequently transferred to analysis equipment such as a mass spectrometer for analysis of the metal contamination therein.

The collection device may adopt a gas-phase-decomposition metal contamination collection device. Other forms of collection devices may also be used according to actual requirements. The present application mainly improves the structure of the offline sampler, which can prevent the scanning fluid containing the dissolved metal contamination from being contaminated by external contaminants during the transfer process and thus avoid affecting the detection result. This part is highlighted below with reference to the drawings. For the convenience of description, the scanning fluid containing the dissolved metal contamination is uniformly referred to as a scanning fluid sample below.

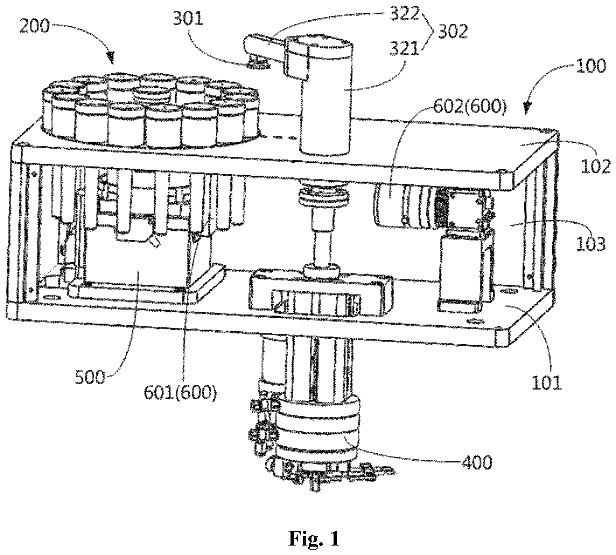

Reference is made to Figure 1, which is a schematic structural diagram of an offline sampler according to an embodiment of the present application.

In the embodiment, the offline sampler includes a test tube module 200, a pick-and-place cover component, and a driving component 400. The test tube module 200 includes at least one test tube 201. Each of the at least one test tube includes a tube body 211 and a cover 212. The tube body 211 is configured to receive a scanning liquid sample, and the cover 212 is configured to seal an opening of the tube body 211. The driving component 400 is configured to drive the pick-and-place cover component to pick up the cover 212 and drive the cover 212 to move to a position where the cover 212 is not interfered with the tube body 211 receiving the scanning liquid sample, or to place the cover 212 on the tube body 211. It can be understood that, that the pick-and-place cover component picks up the cover 21 means the cover 212 that is fastened to the pipe body 211 is opened, and that the pick-and-place cover component places the cover 212 on the pipe body 211 means the cover 212 is covered on the pipe body 211.

The offline sampler is integrated with the collection device of the contamination collection system. A position of a scanning liquid nozzle of the collection device corresponds to a position of the test tube 201 to facilitate spraying the scanning liquid sample into the tube body 211 of the test tube 201.

In practical applications, when the scanning liquid sample needs to be collected, the driving component 400 can drive the pick-and-place cover component to pick up and move the cover 212 away. The scanning liquid nozzle of the collection device can spray the scanning liquid sample into the tube body 211. Then, the driving component 400 drives the pick-and-place cover component to place the cover 212 back to the tube body 211 and cover the opening of the tube body 211 again. In this way, the offline sampler can automatically open and close the cover of the test tube 201. After the scanning liquid sample is collected, external contaminants can be prevented from falling into the test tube by closing the cover, so that contamination of the scanning fluid sample can be avoided, which improves the detection accuracy of the scanning liquid sample.

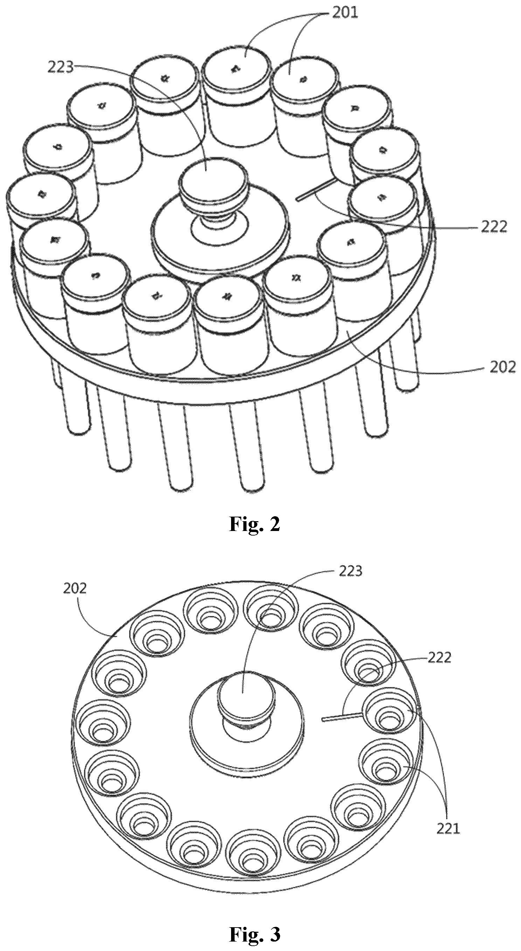

Reference is made to Figures 2 and 3 together. Figure 2 is a schematic structural diagram of the test tube module in Figure 1. Figure 3 is a schematic structural diagram of a carrier disk in Figure 2.

In the embodiment, the test tube module 200 further includes a carrier disk 202. The carrier disk 202 has multiple mounting grooves 221, and the multiple mounting grooves 221 are configured to place the at least one test tube 201. The multiple mounting grooves 221 formed in the carrier disk 202 enable the carrier disk 202 to carry the at least one test tube 201 at once. After multiple scanning liquid samples are collected by the at least one test tube 201, the at least one test tube 201 can be uniformly transferred to analysis equipment such as a mass spectrometer to analyze the multiple scanning liquid samples, so that the detection efficiency can be improved.

In order to facilitate the scanning liquid nozzle of the collection device spraying the scanning liquid sample into each test tube 201 on the carrier disk 202, the offline sampler further includes a rotating mechanism 500. The rotating mechanism 500 is configured to drive the carrier disk 202 to rotate. The multiple mounting grooves 221 in the carrier disk 202 are arranged around a rotation center of the carrier disk 202, and a distance between each mounting groove 221 and the rotation center of the carrier disk 202 is consistent. That is, each mounting groove 221 is located on a circle centered on the rotation center of the carrier disk 202. Such arrangement only requires that the scanning liquid nozzle of the collection device corresponds to a certain position on the circle. In this way, by rotating the carrier disk 202, each test tube 201 arranged on the carrier disk 202 can be rotated to a position corresponding to the scanning liquid nozzle to receive the scanning liquid sample.

The above arrangement of the carrier disk 202 also facilitates the arrangements of the driving component 400 and the pick-and-place cover component. It can be understood that, the position where the pick-and-place cover component picks up the cover 212 and places the cover 212 corresponds to a certain position on the circle. By rotating the carrier disk 202, each test tube 201 arranged on the carrier disk 202 can be rotated to a position where the test tube 201 cooperates with the pick-and-place cover component.

Specifically, the rotating mechanism 500 may include a rotating motor or other component having a rotational driving function. A detachable structure that cooperates with the carrier disk 202 may be provided at a rotation output end of the rotating motor to facilitate the assembly of different carrier disks 202 and the rotating motor, for example, a clamping matching structure may be selected.

Figures 2 and 3 exemplify a structure of the carrier disk 202 having 15 mounting grooves 221. It can be understood that, in actual arrangement, the number of mounting grooves 221 in the carrier disk 202 may be other according to application requirements, such as 1 to 60. Multiple mounting grooves 221 are uniformly arranged around the rotation center of the carrier disk 202, facilitating control of the rotation of the carrier disk 202.

In order to facilitate the identification of multiple test tubes 201 arranged on the carrier disk 202, an identifier 222 is provided on the carrier disk 202 for identifying the mounting groove 221, so that the test tube 201 arranged in the mounting groove 221 can be identified, so as to distinguish different scanning liquid samples in different test tubes 201, and avoid confusion.

A simple configuration is to provide only one identifier 222. The position of the identifier 222 corresponds to the position of one of the mounting grooves 221. The specific structure of the identifier 222 is not limited, which is represented by a transverse line in the figures. Taking the mounting groove 221 corresponding to the identifier 222 as an origin, the mounting grooves 221 may be numbered, that is, the test tubes 201 arranged in the mounting grooves 221 are numbered to be distinguished. For example, the mounting groove 221 corresponding to the identifier 222 is denoted as 1, and the mounting grooves 221 may be numbered clockwise or counterclockwise for identification.

Each mounting groove 221 may be provided with a mark for identification.

In the embodiment, a handle 223 is provided on the carrier disk 202 to facilitate an operator to pick and place the carrier disk 202. Specifically, the handle 223 may be arranged at the center of the carrier disk 202 to ensure that the carrier disk 202 can easily maintain balance during the process of picking and placing the carrier disk 202, so as to prevent the test tubes 201 from falling off.

In the embodiment, the driving component 400 switches the pick-and-place cover component between a first position and a second position by driving the pick-and-place cover component to rotate. The first position is a position where the pick-and-place cover component can pick or place the cover 212, and the second position is a position where the cover 212 does not interfere with the tube body 211 receiving the scanning liquid sample.

The driving component 400 is also configured to drive the pick-and-place cover component to move up and down relative to the carrier disk 202 to facilitate the pick-and-place cover component picking up the cover 212 from the pipe body 211 or placing the cover 212 on the pipe body 211.

As mentioned above, the first position to which the pick-and-place cover component rotates under the driving of the driving component 400 is relatively determined and matches the position of one of the mounting groove 221 in the carrier disk 202. In this way, the carrier disk 202 is driven by the rotating mechanism 500 to allow the mounting grooves 221 on the carrier disk 202 to rotate to a position corresponding to the first position in sequence, so that the pick-and-place cover component can perform a corresponding operation on the test tube 201 mounted in each mounting groove 221.

Specifically, the driving component 400 includes a lifting driving part and a rotation driving part. The lifting driving part may specifically include a lifting driving source, such as a telescopic cylinder or an electric cylinder. A sliding table may be provided to be fixedly connected to a lifting part of the lifting driving source, the rotation driving part may be mounted on the sliding table, and an output end of the rotation driving part may be connected to the pick-and-place cover component. In this way, under the driving of the lifting driving part, the rotation driving part and the pick-and-place cover component can be lifted and lowered together. Specifically, the pick-and-place cover component can be lifted and lowered within a range of 0mm to 500mm in the vertical direction. The rotation driving part can drive the pick-and-place cover component to rotate, and specifically, the pick-and-place cover component can rotate within a range of 0 degree to 360 degrees.

The rotation driving part may specifically be a motor or the like. The lifting driving part may also be provided with a guiding part for guiding the lifting and lowering of the sliding table. The sliding table is slidably mounted on the guiding part.

The pick-and-place cover component may be specifically connected to the rotation driving part through a swing arm 302. In the embodiment, the swing arm 302 includes a first arm 321 vertically arranged and a second arm 322 perpendicular to the first arm 321. The first arm 321 is connected to the rotation driving part.

In this embodiment, the pick-and-place cover component adopts a suction cup structure, which specifically includes a suction cup 301 and a vacuum generator (not shown in the figures). The suction cup 301 is mounted at an end of the second arm 322. In this way, an axis of the first arm 321 is a rotation centerline of the suction cup 301, and a length of the second arm 322 is equivalent to a rotation radius of the suction cup 301.

The vacuum generator is connected to the suction cup 301 through a ventilation pipeline. The suction cup 301 is configured to suck the cover 212. Specifically, the swing arm 302 may be of a hollow structure and have an internal space, and the ventilation pipeline connected to the suction cup 301 may be disposed in the internal space of the swing arm 302.

In practical application, the lifting driving part of the driving component 400 drives the suction cup 301 to an appropriate height, the rotation driving part drives the suction cup 301 to rotate to the first position, and then the lifting driving part drives the suction cup 301 to descend to a height matching the test tube 201 corresponding to the first position. The vacuum generator is used to evacuate the suction cup 301 to allow the suction cup 301 to suck the cover 212, and then the lifting driving part drives the suction cup 301 to rise to drive the cover 212 to detach from the tube body 211 of the test tube 201. The rotation driving part drives the suction cup 301 to rotate to the second position, and the scanning liquid nozzle of the collection device can spray the scanning liquid sample to the tube body 211 at the first position. Then, the driving component 400 drives the suction cup 301 to place the cover 212 on the tube body 211 to seal the tube body 211, avoiding contamination of the scanning liquid sample in the tube body 211 and preventing the liquid in the tube body 211 from evaporating. The rotating mechanism 500 drives the carrier disk 202 to rotate, so that a next test tube 201 can be rotated to the position that can match the suction cup 301 for performing the next operation. In this cycle, after all test tubes 201 on the carrier disk 202 are filled with scanning liquid samples, the carrier disk 202 is transferred to the mass spectrometer.

The suction cup 301 may be made of at least one of rubber, silicone, soft PVC (polyvinyl chloride), or synthetic rubber.

It should be noted that, the fit between the tube body 211 and the cover 212 of the test tube 201 should not only meet the sealing requirements, but also allow the suction cup 301 to suck the cover 212 easily, and after the cover 212 is sucked, only the cover 212 is required to be lifted upwards to separate from the tube body 211.

For the analysis of metal contamination, accurate measurement of a volume of the scanning liquid sample is also one of the foundations of the analysis. In the embodiment, the offline sampler is also provided with a volume acquisition module 600. The volume acquisition module 600 is configured to determine the volume of the scanning liquid sample received in the test tube 201.

In order to facilitate the arrangement, the volume acquisition module 600 in the embodiment adopts an optical measurement mode. As shown in Figure 1, the volume acquisition module 600 includes a light source 601, an image capture device 602, and an image analysis member. The image capture device 902 is configured to photograph the test tube 201 that receives the scanning liquid sample and transmit a photographed image to the image analysis member. The image analysis member is configured to determine the volume of the scanning liquid sample received in the tube body 211 of the test tube 201 based on the received image. The light source 601 is configured to provide sufficient light for photographing. The image capture device 602 may be a conventional camera and the like. Specifically, a camera with a resolution of 2 million pixels to 10 million pixels may be selected.

In order to simplify the structure and save space, the light source 601 may be mounted on the carrier disk 202, that is, the light source 601 and the test tube 201 may rotate together with the carrier disk 202.

Specifically, the image analysis member may determine a liquid level height of the scanning liquid sample in the tube body 211 of the test tube 201 based on the acquired image. An inner diameter of the tube body 211 may be determined in advance. In this way, the volume of the scanning liquid sample in the tube body 211 can be determined.

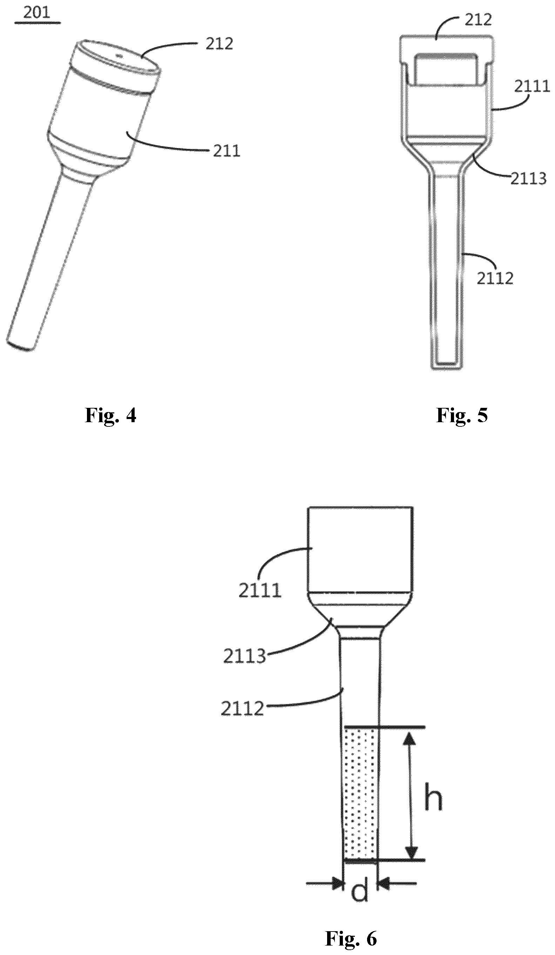

Generally speaking, the volume of the scanning liquid sample sprayed into the tube body 211 by the scanning liquid nozzle of the collection device is relatively small. In order to facilitate measurement and reception of the scanning liquid sample, the structure of the tube body 211 is designed to be similar to a shape of a hand grenade. It can be understood with reference to Figures 4 to 6, the tube body 211 includes a large-diameter section 2111 and a small-diameter section 2112 connected to the large-diameter section 2111. The opening of the tube body 211 is formed at the large-diameter section 2111 to facilitate the scanning liquid nozzle of the collection device to spray the scanning liquid sample into the opening of the tube body 211. After the scanning liquid sample is sprayed, the scanning liquid sample falls into the small-diameter section 2112, which facilitates measurement and is also conducive to accurate measurement of the volume of the liquid in the small-diameter section 2112. During actual setting, a ratio of a diameter to a length of the small-diameter section 2112 may be set according to actual requirements, so as to facilitate measurement.

Specifically, the pipe body 211 further includes a transition portion 2113 between the large-diameter section 2111 and the small-diameter section 2112. The transition portion 2113 is designed in a conical structure, that is, a radial size of the transition portion 2113 gradually decreases from the large-diameter section 2111 to the small-diameter section 2112, so that it can be ensured that all the scanning liquid sample sprayed into the pipe body 211 falls into the small-diameter section 2112.

As shown in Figure 6, the inner diameter d of the small-diameter section 2112 of the tube body 211 may be determined in advance. After the liquid level height h of the scanning liquid sample is determined by the imaging analysis member, the volume of the scanning liquid sample in the scanning tube 201 can be determined

$$V = \pi * \left(\frac{d}{2}\right)^2 * h$$

through a formula .

The mounting groove 221 in the carrier disk 202 is configured to match the structure of the test tube 201. As shown in Figure 2, the mounting groove 221 may specifically include a groove body and a through hole formed in a bottom wall of the groove body. The groove body is matched with the large-diameter section 2111 of the pipe body 211, and the through hole may be configured for the small-diameter section 2112 of the pipe body 211 to pass through.

In the embodiment, in order to facilitate installation and setting, the offline sampler includes a sampling box 100, and the aforementioned structures can be mounted in the sampling box 100. The sampling box 100 has a chamber. During setting, the rotating component 500, the small-diameter section 2112 of the test tube 201 in the test tube module 200 and the volume acquisition module 600 may be arranged in the chamber to avoid external interference on various components, especially the interference of external light on the volume acquisition module 600.

Specifically, the sampling box 100 includes a bottom wall 101 and a top wall 102 that are opposite, and further includes side walls 103 enclosed between the bottom wall 101 and the top wall 102. As shown in Figure 1, in order to clearly illustrate the relative positions of various components, part of the side walls 103 are omitted.

As shown in Figure 1, after the test tube 201 is placed on the carrier disk 202, the small-diameter section 2112 of the tube body 211 of the test tube 201 extends into the chamber of the sampling box 100 to facilitate the image capture device 602 to capture an image, and the large-diameter section 2111 is located outside the top wall 102 of the sampling box 100 to facilitate receiving the scanning liquid sample.

The sampling box 100 may also have an air extraction port. The air extraction port may be connected to an exhaust pipeline of the collection device, so that the chamber of the sampling box 100 is in a negative pressure state to prevent corrosive gases or other impurities in the sampling box 100 from overflowing to the external space.

In practical applications, the tube body 211 and the cover 212 of the test tube 201 may be made of one or a combination of two or more, of perfluoroalkoxy resin (PFA), polytetrafluoroethylene (PTFE), ethylene tetrafluoroethylene (ETFE), polychlorotrifluoroethylene Ethylene (PCTFE), polyvinylidene fluoride (PVDF), polyvinyl chloride (PVC), polypropylene (PP), polyether ether ketone (PEEK), polyphenylene sulfide (PPS), and polymethyl methacrylate (PMMA).

According to practical application requirements, the structure of the swing arm 302 may be made of a corrosion-resistant plastic part or a metal part with a Teflon (PTFE, polytetrafluoroethylene) coating to avoid corrosion of the swing arm 302 and ensure the stability of the sampler structure.

The offline sampler and the contamination collection system according to the present application have been introduced in detail above. Specific embodiments are used herein to illustrate the principles and the implementations of the present application, and the descriptions of the above embodiments are only used to help understand methods and core ideas of the present application. It should be pointed out that for those skilled in the art, some improvements and modifications may be made to the present application without departing from the principles of the present application, and these improvements and modifications shall fall within the protection scope of the claims of the present application.

**Claims**

1. An offline sampler for a contamination collection system, comprising a test tube module, a pick-and-place cover component, and a driving component; wherein the test tube module comprises at least one test tube, each of the at least one test tube comprises a tube body and a cover, the tube body is configured to receive a scanning liquid dissolved with metal contamination, and the cover is configured to block an opening of the tube body; and the driving component is configured to drive the pick-and-place cover component to pick the cover and drive the cover to move to a position where the cover is not interfered with the tube body receiving the scanning liquid, or place the cover on the tube body.

2. The offline sampler according to claim 1, wherein the test tube module comprises a carrier disk, the carrier disk has a plurality of mounting grooves, and the plurality of mounting grooves are configured for placing the at least one test tube; the offline sampler further comprises a rotating mechanism, the rotating mechanism is configured to drive the carrier disk to rotate, the plurality of mounting grooves are arranged around a rotation center of the carrier disk, and a distance between each of the plurality of mounting grooves and the rotation center of the carrier disk is consistent.

3. The offline sampler according to claim 2, wherein the carrier disk is provided with an identifier for identifying each plurality of mounting grooves.

4. The offline sampler according to claim 2, wherein a handle is provided on the carrier disk.

**5.** The offline sampler according to any one of claims 1 to 4, wherein the driving component is configured to drive the pick-and-place cover component to rotate to switch between a first position and a second position, the first position is a position where the cover is pickable or placeable by the pick-and-place cover component, and the second position is a position where the cover is not interfered with the tube body receiving the scanning liquid; and the driving component is also configured to drive the pick-and-place cover component to move up and down relative to the carrier disk.

**6.** The offline sampler according to claim 5, wherein the driving component comprises a lifting driving part and a rotation driving part, the rotation driving part is mounted on a lifting part of the lifting driving part, and the pick-and-place cover component is connected to a rotation output end of the rotation driving part.

**7.** The offline sampler according to any one of claims 1 to 4, wherein the pick-and-place cover component comprises a suction cup and a vacuum generator, the vacuum generator is connected to the suction cup through a ventilation pipeline, and the suction cup is configured to suck the cover.

**8.** The offline sampler according to claim 7, further comprising a swing arm, wherein the suction cup is mounted on the swing arm, and the driving component is configured to drive the suction cup to act by driving the swing arm.

**9.** The offline sampler according to claim 8, wherein the swing arm has an internal space, and the ventilation pipeline is disposed in the internal space.

**10.** The offline sampler according to any one of claims 1 to 4, further comprising a volume acquisition module, the volume acquisition module is configured to determining a volume of the scanning liquid received in the tube body.

**11.** The offline sampler according to claim 10, wherein the volume acquisition module comprises a light source, an image capture device, and an image analysis member; the light source is configured to provide light for the photographing of the image capture device, the image capture device is configured to photograph the tube body that receives the scanning liquid and transmit an image that is photographed to the image analysis member, and the image analysis member is configured to determine the volume of the scanning liquid received in the tube body based on the image.

**12.** The offline sampler according to claim 11, wherein the tube body comprises a large-diameter section and a small-diameter section connected to the large-diameter section, and the opening of the tube body is formed at the large-diameter section.

**13.** The offline sampler according to claim 12, further comprising a sampling box, wherein the sampling box has a chamber, and both the small-diameter section of the tube body and the volume acquisition module are arranged in the chamber.

**14.** The offline sampler according to claim 13, wherein the sampling box also has an air extraction port communicating with the chamber.

**15.** A contamination collection system, comprising a collection device, wherein the contamination collection system further comprises the offline sampler according to any one of claims 1 to 14, the offline sampler is integrated with the collection device, and a scanning liquid nozzle of the collection device corresponds to a position of the test tube module.

**Fig. 1**

**Fig. 2**

**Fig. 3**

**Fig. 4**

**Fig. 5**

**Fig. 6**

## INTERNATIONAL SEARCH REPORT

| | International application No. |
|---|---|
| | **PCT/CN2021/130894** |

| **A.** | **CLASSIFICATION OF SUBJECT MATTER** |
|---|---|
| | G01N 1/02(2006.01)i |

According to International Patent Classification (IPC) or to both national classification and IPC

| **B.** | **FIELDS SEARCHED** |
|---|---|

Minimum documentation searched (classification system followed by classification symbols)

G01N 1

Documentation searched other than minimum documentation to the extent that such documents are included in the fields searched

Electronic data base consulted during the international search (name of data base and, where practicable, search terms used)

CNTXT, VEN: 管, 盖, 帽, 开盖, 取放, 加盖, 旋转, 转动, 上下, 升降, 自动, 金属, 扫描液, cap, lid, tube, rotat+, automatic+

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | CN 103988064 B (GEN-PROBE INC.) 14 September 2018 (2018-09-14) <br> description, paragraphs 103-104 and 147-174, and figures 1-6 | 1-4, 10-14 |
| Y | CN 103988064 B (GEN-PROBE INCORPORATED) 14 September 2018 (2018-09-14) <br> description, paragraphs 103-104 and 147-174, and figures 1-6 | 5-9, 15 |
| Y | CN 204251623 U (WEIHAI SHILI ELECTRONIC TECHNOLOGY CO., LTD.) 08 April 2015 (2015-04-08) <br> description, paragraphs 79-83 | 5-9 |
| Y | CN 213546269 U (XIAN ESWIN SILICON WAFER TECHNOLOGY CO., LTD.) 25 June 2021 (2021-06-25) <br> description, paragraphs 69-77 | 15 |
| X | CN 111286458 A (WEIHAI BAIBO MEDICAL INTELLIGENT ROBOT CO., LTD.) 16 June 2020 (2020-06-16) <br> description, paragraphs 67-71 and 101-109, and figures 3-6 | 1 |
| Y | CN 111286458 A (WEIHAI BAIBO MEDICAL INTELLIGENT ROBOT CO., LTD.) 16 June 2020 (2020-06-16) <br> description, paragraphs 67-71 and 101-109, and figures 3-6 | 5-9, 15 |

| ☑ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **16 March 2022** | **23 March 2022** |

| Name and mailing address of the ISA/CN | Authorized officer |
|---|---|
| **China National Intellectual Property Administration (ISA/ CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

| | International application No. |
|---|---|
| | **PCT/CN2021/130894** |

### C.    DOCUMENTS CONSIDERED TO BE RELEVANT

| Category* | Citation of document, with indication, where appropriate, of the relevant passages | Relevant to claim No. |
|---|---|---|
| X | CN 112881737 A (HUNAN SUOLAI INTELLIGENT TECHNOLOGY CO., LTD. et al.) 01 June 2021 (2021-06-01)<br>description, paragraphs 101-121 and 142, and figures 1-5 | 1-4 |
| Y | CN 112881737 A (HUNAN SUOLAI INTELLIGENT TECHNOLOGY CO., LTD. et al.) 01 June 2021 (2021-06-01)<br>description, paragraphs 101-121 and 142, and figures 1-5 | 5-9, 15 |
| X | US 2008247914 A1 (EDENS, T. C. et al.) 09 October 2008 (2008-10-09)<br>description, paragraphs 46-52, and figures 1-2 | 1-4 |
| Y | US 2008247914 A1 (EDENS, T. C. et al.) 09 October 2008 (2008-10-09)<br>description, paragraphs 46-52, and figures 1-2 | 5-9, 15 |
| A | CN 112198324 A (BEIJING HUIRONGHE TECHNOLOGY CO., LTD.) 08 January 2021 (2021-01-08)<br>entire document | 1-15 |

# EP 4 372 353 A1

**INTERNATIONAL SEARCH REPORT**
Information on patent family members

International application No.

**PCT/CN2021/130894**

| Patent document cited in search report | | | Publication date (day/month/year) | Patent family member(s) | | | Publication date (day/month/year) |
|---|---|---|---|---|---|---|---|
| CN | 103988064 | B | 14 September 2018 | WO | 2013036941 | A2 | 14 March 2013 |
| | | | | WO | 2013036941 | A3 | 08 May 2014 |
| | | | | CA | 2846906 | A1 | 14 March 2013 |
| | | | | CA | 2846906 | C | 02 January 2018 |
| | | | | US | 2019011473 | A1 | 10 January 2019 |
| | | | | US | 10921338 | B2 | 16 February 2021 |
| | | | | JP | 2020160089 | A | 01 October 2020 |
| | | | | US | 2021132098 | A1 | 06 May 2021 |
| | | | | JP | 2017072610 | A | 13 April 2017 |
| | | | | JP | 6442671 | B2 | 26 December 2018 |
| | | | | JP | 2017072608 | A | 13 April 2017 |
| | | | | CN | 107255731 | A | 17 October 2017 |
| | | | | EP | 3225972 | A1 | 04 October 2017 |
| | | | | JP | 2014526687 | A | 06 October 2014 |
| | | | | JP | 6097297 | B2 | 15 March 2017 |
| | | | | CN | 103988064 | A | 13 August 2014 |
| | | | | AU | 2012305682 | A1 | 02 May 2013 |
| | | | | AU | 2012305682 | B2 | 13 August 2015 |
| | | | | US | 2016077118 | A1 | 17 March 2016 |
| | | | | US | 2016178654 | A1 | 23 June 2016 |
| | | | | US | 10132821 | B2 | 20 November 2018 |
| | | | | JP | 2018136329 | A | 30 August 2018 |
| | | | | CA | 3009281 | A1 | 14 March 2013 |
| | | | | CA | 3009281 | C | 19 October 2021 |
| | | | | CA | 2977889 | A1 | 14 March 2013 |
| | | | | CA | 2977889 | C | 12 February 2019 |
| | | | | JP | 2017072609 | A | 13 April 2017 |
| | | | | JP | 6433090 | B2 | 05 December 2018 |
| | | | | US | 2013065797 | A1 | 14 March 2013 |
| | | | | US | 9335336 | B2 | 10 May 2016 |
| | | | | US | 2018292427 | A1 | 11 October 2018 |
| | | | | US | 10877057 | B2 | 29 December 2020 |
| | | | | EP | 2753914 | A2 | 16 July 2014 |
| | | | | EP | 2753914 | A4 | 05 August 2015 |
| | | | | EP | 2753914 | B1 | 24 March 2021 |
| CN | 204251623 | U | 08 April 2015 | None | | | |
| CN | 213546269 | U | 25 June 2021 | None | | | |
| CN | 111286458 | A | 16 June 2020 | None | | | |
| CN | 112881737 | A | 01 June 2021 | None | | | |
| US | 2008247914 | A1 | 09 October 2008 | US | 7985375 | B2 | 26 July 2011 |
| CN | 112198324 | A | 08 January 2021 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110809072